# EUROPEAN PATENT SPECIFICATION

(11) **EP 1 861 850 B1**
(45) Date of publication and mention of the grant of the patent: **31.12.2008**
(21) Application number: 06711078.3
(22) Date of filing: 10.03.2006
(51) Int. Cl.: G11B 7/007, G11B 20/12, G11B 27/19

(54) **LOCKING AID FOR HIGH DENSITY BD-ROM DISCS**
SPERRHILFE FÜR BD-ROM-DISCS MIT HOHER DICHTE
AIDE DE VERROUILLAGE POUR DISQUES BD-ROM A DENSITE ELEVEE

(30) Priority: 16.03.2005 EP 05102073
(43) Date of publication of application: 05.12.2007
(73) Proprietor: Koninklijke Philips Electronics N.V., 5621 BA Eindhoven (NL)
(72) Inventor: VAN ROMPAEY, Bart, NL-5656 AA Eindhoven (NL); PADIY, Alexander, NL-5656 AA Eindhoven (NL)
(74) Representative: Uittenbogaard, Frank
(86) International application number: PCT/IB2006/050760
(87) International publication number: WO 2006/097881

(56) References cited:
- EP-A- 1 150 291
- EP-A- 1 351 222
- EP-A- 1 447 806
- US-B1- 6 418 111

## Description

The present invention relates to storage and retrieval of information on / from an information carrier, especially such as an optical disc. In particular the invention relates to a locking aid for bit detection on optical discs, such as high density optical discs, e.g. Blu-ray discs.

Currently there is an extensive ongoing research on data storage systems such as optical discs, e.g. CD, DVD, and BD (Blu-ray disc) systems, in order to keep up with the ever increasing demand for data storage capacity from users. BD utilize a similar technology as for the conventional CD systems; however, the wavelength of the laser used is of 405 nm, tough other wavelengths may be considered.

Some of the current research and development within the BD technical field involve the possibility to increase the data storage capacity of the Blu-ray discs above the standard specification of 23.3GB, 25GB and 27 GB. Different technologies are utilized in order to achieve higher densities of data bits stored on these discs. Unfortunately, increasing the density of bits increases the probability for read and/or write errors if no improvements of the signal processing circuits are made. Different attempts to overcome this problem are known from the prior art.

In BD-ROM discs the user-information is organized in RUBs (Recording Unit Blocks), which comprise linking areas, located at the borders of the RUBs, containing data *a-priori* unknown to the reading system. The linking areas in BD-ROM are constructed so as not to disturb the DC-control subsystem nor the locking aids for acquiring a frequency lock for the timing recovery subsystem, which utilizes the known distance between the equidistant frame syncs in the HF data stream and the known average run-length of the channel data stream. However, for higher density Blu-ray discs the locking aid based on the average run-length distribution becomes less robust making the frequency lock procedure vulnerable.

Reliable data decisions have to be provided to data-aided adaptation loops such as timing recovery, channel response estimation for the PRML bit detection, adaptive equalizer control, DC offset and gain mismatch compensation, etc., since in the case of the data decisions of poor quality the loops can become unstable, and this in turn may lead to the breakdown of the complete system. This issue is especially important during receiver ramp-up , that is after a seek operation, for example, when most of the adaptation loops are not settled yet. In order to resolve the above issue and ensure reliable ramp-up of the adaptation loops, data patterns a-priori known to the receiver (so-called preambles) may be written on the storage media at fixed locations in between the a-priori unknown user data, and the adaptation loops are then controlled using these known data patterns. Then the timing recovery, the DC offset control, the adaptive channel response estimation and settling of other adaptive systems may be performed using these known preamble patterns.

The existing optical disc formats however do not employ a-priori known preamble fields. One of the reasons for not including them is the use of RLL (Run Length Limited) channel coding, which significantly limits inter-symbol interference. This allows achieving robust operation of the control loops even in the absence of the preamble fields; until now there has not been a real need in such fields in the optical recording. Another reason for not including them in the format is the desire to be insensitive to media defects like scratches: the preamble-based systems may have severe problems in case of damaged preamble fields if they rely too strongly on them.

The need in data-aided adaptation appears in systems featuring extended capacity since these have much more pronounced inter-symbol interference issues.

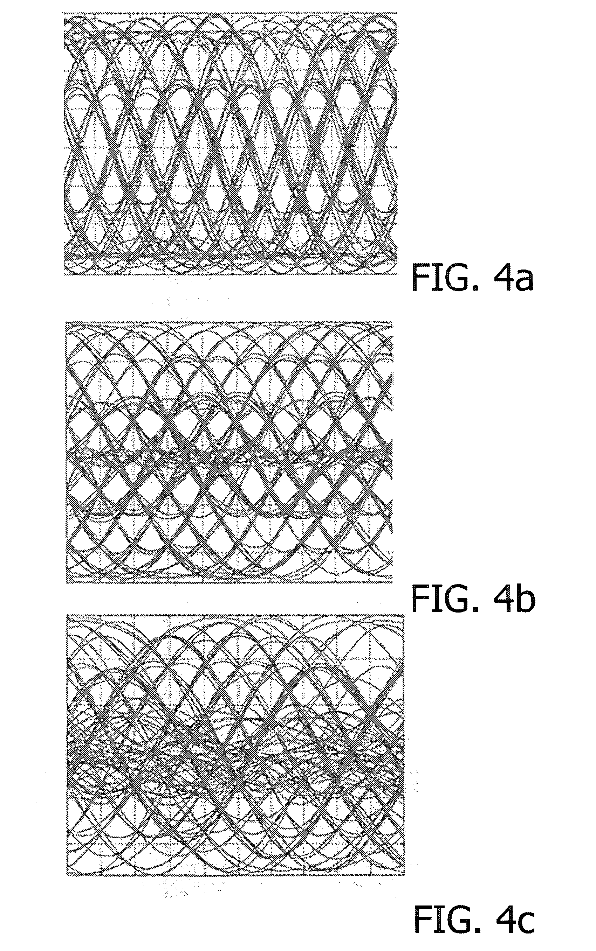

It may be clear by viewing Figs. 4 illustrating the pattern of an eye-diagram from a frequency measurement of the measured signal, that when the information (bit) density is increased the pattern in an eye-diagram becomes increasingly more complex and more difficult to interpret and the possibilities to sample the signal correctly is reduced as it has been found out by the inventor. Fig. 4a illustrates a 23 GB BD disc, Fig. 4b a 31 GB BD disc, and Fig. 4c a 35 GB BD disc.

In these systems, it would be very advantageous to use the preamble fields as an additional aid for speeding up the drive operation. In particular, ramp-up time of the receiver after a jump from one location on the disc to another is very important and should be minimized in order to achieve high random-access data-rates. It remains important, however, that the drive should still be able to recover from the situation when the preamble field is damaged. The ramp-up speed may of course be lower in this case.

Some of the adaptive systems employed in a BD-readout, which can benefit from using a data-aided mode of operation are listed below:
- DC-compensation unit;
- Gain-compensation unit;
- Timing recovery unit (both frequency lock aids and phase lock loop);
- Channel response estimation unit as used within PRML detector;
- Adaptive equalization unit;
- Cross-talk cancellation unit.

In order to ensure fast and reliable adaptation, the preamble fields used for adaptation should ideally satisfy the following requirements:
- should be close to DC-free in order to enable DC-compensation schemes based on the RDS (running digital sum) algorithm as used in most optical drives;
- average run-length of the preamble fields should be close to the average run-length of the main channel code in order to facilitate frequency lock aids of the timing recovery circuits based on driving the measured average run-length towards the expected value defined by the main channel code (approximately 3.4 for the 17PP code as used in BD);
- should contain sufficient high-frequency content in order to facilitate fast phase lock of the phase lock loop (PLL);
- should be "whistle-free" i.e. they should contain a range of different frequency components in order to facilitate robust convergence of the adaptive systems based on the LMS algorithm (such as LMS-based adaptive equalizer or LMS-based cross-talk canceller);
- should contain sequences critical for estimating the channel response within PRML (Viterbi) bit detector;

In BD-R and BD-RE systems, a fixed run-in pattern is written in the linking areas. This pattern can readily serve as preamble for data-aided adaptation. The run-in pattern is the same for all linking areas on the disc. For BD-ROM system, such an approach based on a single fixed run-in pattern would not work because of the problems with radial tracking system in the BD-ROM case. The so-called differential phase detection (DPD) tracking used for BD-ROM fails when two adjacent tracks contain the same data for a relatively long amount of time. Since the data on the BD discs is arranged in a spiral, at a number of disc radii two different recording unit blocks (RUB) from the adjacent tracks start at the same angular position. If the preambles of the two RUB are equal, then the two adjacent tracks would contain the same data in the two aligned preambles (i.e. for 3864 channel bits if the whole linking area in BD-ROM is filled with a fixed run-in pattern), and this would lead to instability of the DPD-based radial tracking. Therefore, the preamble fields in BD-ROM should be differentiated such that this problem is eliminated. The tracking issue does not arise in the BD-R and BD-RE systems as they use a different radial tracking system based on the so-called push-pull (PP) principle. In BD-R and BD-RE, a wobbled pre-groove is present on the discs, which is used for generating the tracking signal instead of the channel data as is done in BD-ROM. Due to this the pre-groove-based radial tracking signal in BD-R and BD-RE is insensitive to the structure of the main channel data. The situation is different for BD-ROM discs where no pre-groove is available, and the radial tracking should be based on the spiral track formed by the main channel data.

A system, an apparatus and a record carrier according the preambles of independent claims is known from prior art EP-A- 1447806.

It is an object of the present invention to provide a system comprising an information carrier and an apparatus for accessing said information carrier according to which a more stable bit detection is achieved, particularly when a high inter-symbol interference is present.

It is a further object of the present invention to provide the information carrier and the apparatus for accessing said information carrier for use in such a system.

According to the invention the object is achieved by a system as claimed in claim 1.

The markers encode the auxiliary information, which is used by the adaptive parameters adjustment unit for bringing the set of control parameters into the respective valid ranges. The markers are so designed that the auxiliary information can be extracted even when some control parameters have values outside their respective valid ranges. To this end the markers may have a long run-length, for example of the maximum length allowed by the RLL code in use, and the encoded auxiliary information consists of one bit, defined by the polarity of the long run-length; moreover this polarity is determined by sampling the long run-length relatively far from the transitions so as to maximize the possibility that the polarity is correctly determined even when the PLL and slicer are not correctly settled, though not totally far from the valid ranges. Advantageously, the markers as a whole are compliant with the RLL code in use so as to involve minimal modification of the decoding circuitry and minimal perturbation in the bit detection process.

Preferably, the markers are substantially DC-free in order to enable DC-compensation schemes based on the RDS (running digital sum) algorithm as used in most optical drives and an average run-length of the markers is intimate to an average run-length of a main channel code in order to facilitate frequency lock aids of the timing recovery circuits based on driving the measured average run-length towards the expected value defined by the main channel code. The markers may further contain one or several of: a high-frequency content in order to facilitate fast phase lock of the phase lock loop (PLL), a range of different frequency components in order to facilitate robust convergence of the adaptive systems based on the LMS algorithm (such as LMS-based adaptive equalizer or LMS-based cross-talk canceller), sequences critical for estimating a channel response within PRML (Viterbi) bit detector.

Preferably, the link frame is constructed by inserting the sequence of markers in the beginning of the link frame followed by a first content of the link frame followed by a stitching sequence. According to an embodiment, the stitching sequence fits a truncated version of a first link frame with the frame sync of the next frame. Most preferably, the stitching sequence matches a running digital sum (RDS) value of the original link frame.

According to the most preferred embodiment, the information carrier is a high density optical disc, e.g. a Blu-ray disc.

During ramp-up, data-aided control based on the data stream made known to the receiver is more robust than the decision-directed control based on the output of the bit detector, since the latter may produce bit decisions of poor quality during the ramp-up since the other subsystems (timing recovery, DC-compensation, etc.) are unable to provide adequate conditioning of the readout signal at the bit detector input yet. In other words, a chicken-and-egg problem during the receiver ramp-up, which is associated with the decision-directed mode of control, is being circumvented by providing the receiver with robust means of recovering the data stream being read out, and therefore enabling it to control the loops using the reliable data.

According to the invention the further object is achieved by an apparatus as claimed in claim 9 and by an information carrier as claimed in claim 11.

The invention also relates to an apparatus for recording information on an information carrier as claimed in claim 10.

These and other aspects of the invention will be apparent from and elucidated with reference to the embodiments described hereinafter.

In the following the invention will be described in a non-limiting way and in more detail with reference to exemplary embodiments illustrated in the enclosed drawings, in which:
Fig. 1 is a schematic block diagram illustrating a BD system according to the present invention;
Fig. 2 is a schematic block diagram of a device according to the present invention;
Fig. 3 is a schematic illustration of a sequence of recording unit blocks according to the current standard;
Figs. 4 illustrate eye-patterns obtained while reading out discs with increasing data density;
Figs. 5a and 5b illustrate different markers for the encoding of the bits; and
Fig. 6 shows the composition of a BD recording frame.

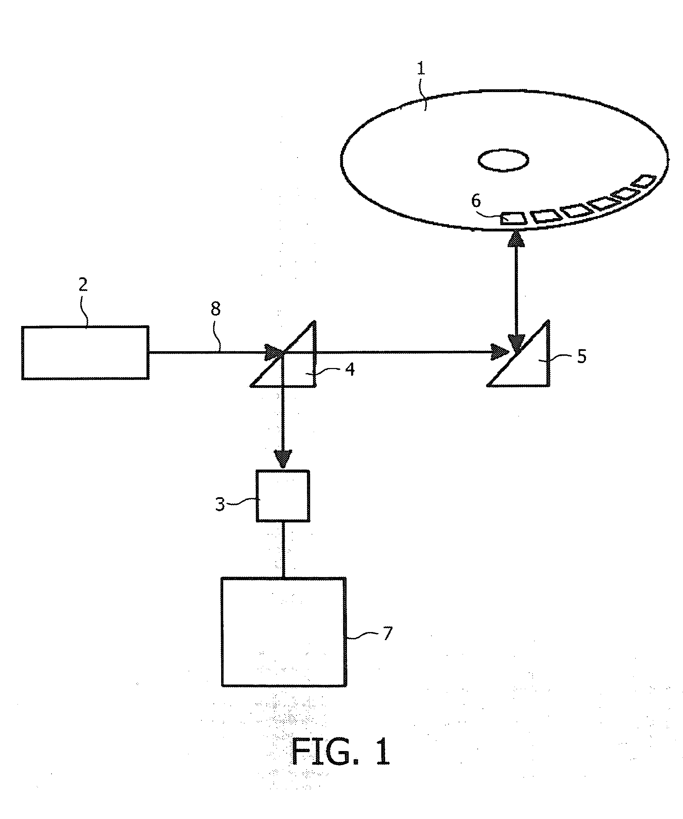

Fig. 1 illustrates a system for reading and writing data to/from an optical disc using an optical source, e.g. a laser with a laser wavelength of 405 nm, for reading and writing the data. The invention is not limited to the above mentioned laser wavelength; however, this wavelength is used in the best mode of the present invention. A disc 1 is used for storing data and a laser 2 produces a light beam 8 directed onto the disc 1. The light beam 8 passes through several optical components 4, 5, the number of components depends on the specific solution used and is not important for the presentation of the present invention. The light beam 8 is reflected from the disc 1 and is transferred to a detector 3 which in turn is connected to a processing unit 7 for signal analysis and depending on appliance; the data is presented in different ways. For instance, for a music player, music is outputted either through an amplifier or directly to a speaker (not shown), for a video player, a video signal is outputted to a television set, or in the case of a data reader data bits are outputted to for instance a personal computer (PC).

The term light beam is not limited to photonic radiation in the visible ranges but should be understood by the person skilled in the art as a beam of photons at any wavelength. The optical beam 8 is subject to different optical components such as at least one focusing lens (not shown), one or several actuating optical components for moving the optical beam to different positions on the disc 1, and a detector 3 for detecting reflected radiation indicative of data recorded on the disc. In some solutions several of these functions may be incorporated into a reading head that may be movable with respect to the radial direction of the disc 1.

Data is stored on the disc as a pattern having some reflectivity changes along a spiral track. Additionally, some control information such as address information may be present in the form of a wobble oscillation of the track.

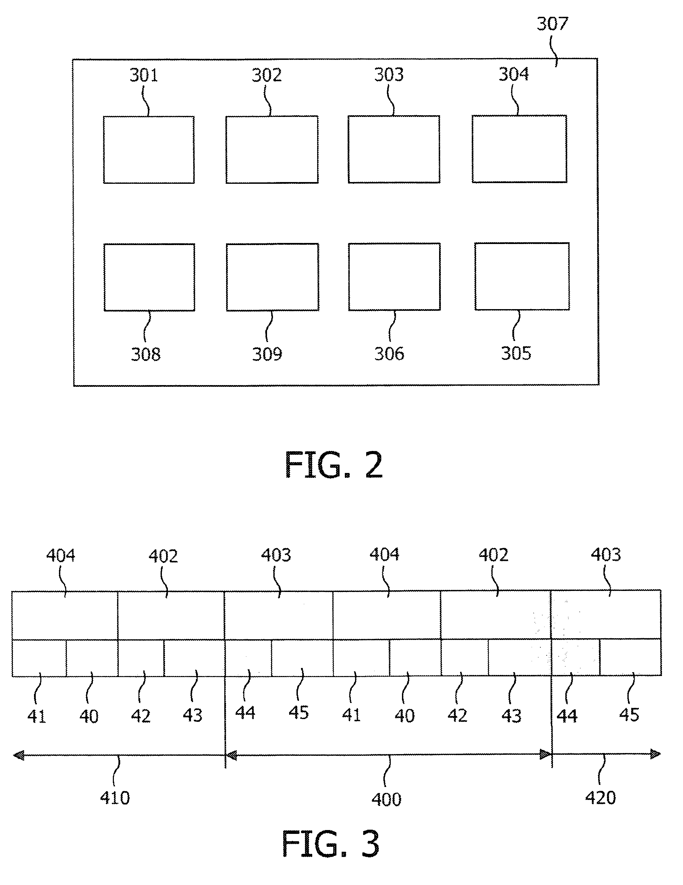

Data is measured by a detector 3 and the data signal is processed by a processing unit 301 as seen in Fig. 2. The processing unit 301 may comprise e.g. a demodulator, reformatter, and error detection means. Other functions may be provided by the processing unit 301, such as control mechanisms for controlling the reading process and location of radiated optical beam, reading speed, or other steering mechanisms. The processing unit 301 may be part of a disc reading device 307 further comprising e.g. a memory unit 302, output means 304, input means 305, connectivity means 306, and other functionality means 303. The system further comprises, integrated with the detector 3 or in communication with the same, a bit detection unit 308 and an adaptive adjustment unit 309, functions of which will be described below.

The processing unit 301 may be a microprocessor, a DSP (digital signal processor), an ASIC (Application Specific Integrated Circuit), an FPGA (Field Programmable Gate Array), or similar computational unit.

The memory unit 302 may comprise either a volatile memory such as, but not limited to, a RAM chip, or a non-volatile memory such as, but not limited to, rewritable ROM, hard disc, flash memory, or other commonly available memory solutions.

Output means 304 may be used for outputting a read signal to an external device for further processing or for end user usage. Signals may outputted to, for instance, a computer for transferring data, to a music or video playback system, or they may be outputted directly to a viewing device such as a television monitor set.

Input means 305 may be used for human or device interaction with the disc reading device. A person may want to control the disc reading device directly using buttons located on the device or through a remote control device for starting, stopping, or similar operative functioning control. Connectivity means 306 may be used for acquiring signals from the disc reading components (optical components, detector and so on). Other communication means (not shown) may be used for communicating with the device using network functionality, such as Ethernet or similar packet based communication protocols, wired or wireless.

It has already been outlined with reference to Figs. 4 the degradation of the eye-pattern involved by the increase of data density. According to an embodiment of the present invention the linking areas as known from the BD-ROM format are modified with the aim to facilitate their use for settling the adaptation loops in the data-aided mode. In order to minimize the drive redesign effort required for implementing the proposed change, the proposed new format of the linking areas is designed to resemble the current format as closely as possible.

The linking areas may be viewed in Fig. 3 wherein the recording unit block (RUB) 400 is shown in relation to adjacent RUBs 410 and 420. The recording unit block 400 comprises three main parts: link frame 1 402, link frame 2 403, and a physical cluster 404. Link frames 1 and 2, 402 and 403, respectively, comprise a frame sync 42 and 44 and control bits 43 and 45 respectively. The physical cluster 404 comprises similarly a frame sync 41 and actual data bits 40.

In the case of prior art solutions, a pseudo-random data put in the linking frames is generated using the address information of the RUB preceding the linking area. Namely, the value derived from physical sector numbers of the preceding physical cluster are used to uniquely define 308 (2x154) user-bytes, which are then written (after the channel coding by means of the 17PP channel code) onto the disc in the linking area. It should be noted that in the prior art version of the BD-ROM standard the channel-bits actually written onto the disc are not fully defined by the user-data since a certain freedom is allowed in the 17PP encoder with respect to DC-control. However, the way of performing DC-control (inserting DC-bits in the user data stream) can be specified more strictly in the next version of the BD-ROM standard. In this case, the 308 user-bytes would uniquely define the channel-bits written onto the disc.

If during readout the address information is available (i.e. the location of the laser beam with respect to the data on the disc is known), then the user-data stream can be regenerated in the receiver and used if required for data-aided settling of the adaptation loops. However, the address information is stored in the main data channel and, therefore, cannot be retrieved before the receiver has ramped up. This means, in turn, that the data stream in the linking areas, which would help to ramp up the receiver, cannot be regenerated, leading to a chicken-and-egg problem.

According to an embodiment of the present invention, the above chicken-and-egg problem is overcome by encoding in the markers the bits S19 to S5 of the Physical sector Number of any frame belonging to a given cluster. These bits, hereinafter referred to as S 14 to S0 are defining the address-data bytes needed in the linking area in order to enable regeneration of the data stream on the receiver side. It is proposed to write the bits S 14 to S0 in the beginning of the link frame 1 402 (and, possibly, also in the beginning of the link frame 2 403 (as seen in Fig. 3), for increasing system robustness with respect to disc defects). For even better robustness, it is proposed to include additional redundant information on the bits S14 to S0 for error-detection (and possibly also error-correction) purposes; either a number of parity bits can be included, or the bits S14 to S0 may simply be duplicated a number of times on the disc. Ideally, the markers used for storing the bits S 14 to S0 should be DC-free and have an average run-length close to the average run-length of the main channel code (3.4 for the 17PP code used in BD) in order to ensure full compatibility with the DC control and timing recovery algorithms employed currently in BD.

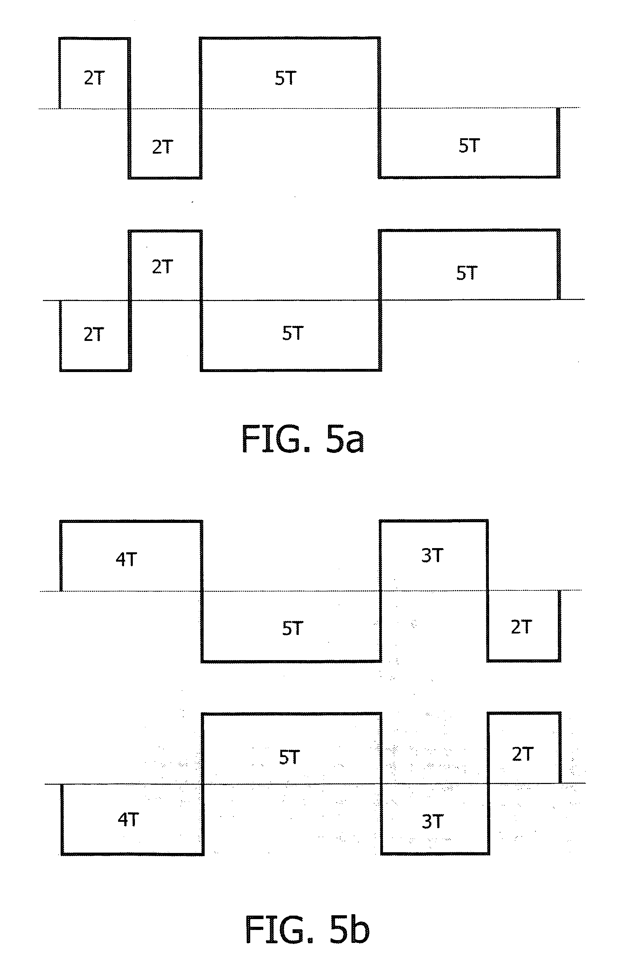

S14 to S0 determine the seed of a scrambling circuit which scrambles the data to put in the rest of the linking frame. When the bit detection starts one needs a known sequence of bits in the linking frames to aid the lock in process. The bits S14 to S0 is encoded with the markers shown in Figs. 5a and 5b at the start of each linking frame. These markers can be easily decoded to retrieve the bits S0 to S14, once these are known and by initializing the scrambling circuit with them, one can regenerate the random data that is present in that linking frame. Then the data is known and the locking aid can be performed with the known data. Of course, the receiver may use the robust markers from Figs. 5a and 5b for the data-aided control as well in addition to the recovered data from the rest of the linking frame. Markers according to the embodiments of Figs. 5a and 5b comprise data patterns with varying polarity and information is encoded in the polarity of the markers. Thus, according to one embodiment of the system the polarity may be determined by detecting polarity variation by sampling certain points.

By taking the above measures, the bits S 14 to S0 may be reliably retrieved, and data content of the whole linking area can be regenerated in the BD-ROM receiver thus enabling data-aided adaptation of the control loops.

An embodiment for constructing the modified linking area channel bit stream containing the information about the bits S14 to S0 is described below.

The modified link frame 1 402 or link frame 2 403 may be constructed by placing at the beginning of the link frame 402, 403 as defined in Fig. 3 the sequence of markers containing the auxiliary information, which in this case is represented by the bits S14 to S0, followed by a stitching sequence designed to fit this beginning of the link frame 402, 403 with the rest of it. Therefore the link frame *n* 402 and/or 403 comprises:
- FS7 42 (FS8 44),
- Sequence of channel bits in which the bits S14 to S0 (+ possibly redundancy) are robustly encoded,
- Stitching channel bit sequence,
- Channel bits corresponding to the rest of the original link frame.

If no redundant information (like parities) is included, then the bits S 14 to S0 may be written onto the disc by means of, e.g. 15 robust 14-bit markers, as illustrated in Figs 5a and 5b, which in this case takes in total 210 channel bits. The number of markers and the number of bits may be varied depending on coding schemes used and should only be seen as an example. 14-bit long DC-free channel-bit sequences 2T-2T-5T-5T and 4T-5T-3T-2T as depicted in Figures 5a and 5b, respectively, may be used as markers for encoding the values of 0 and 1 for the bits S 14 to S0. The polarity of the markers is uniquely defined by the polarity of the frame sync FS7 42 (FS8 44). Detection of the particular marker (0 or 1) can be easily done, e.g. by detecting the signal amplitude at the middle of the central 5T run-length. The same markers can also be used for storing the redundant information if decided to do so. Thus, the proposed markers satisfy the requirements since they are DC-free, have an average run-length of 3.5, and are insensitive to timing errors, gain variations, etc.

Additionally, it is possible to reliably recover the bits S14...S0 from the disc even if the timing recovery circuit, DC compensation circuit and the bit detection circuit are not fully stable, i.e. if control parameters are still outside their valid ranges. Also, the channel bit sequence used for encoding the bits S14...S0 should not disturb DC-free properties and average run-length of the main channel code. The proposed markers satisfy the above conditions as they are insensitive to the timing errors, can be detected reliably by a simple detection circuit, e.g. by means of sign detection of the large-amplitude signals far away from the zero crossings, are DC-free and have a run-length close to the one of the main channel codes.

It should be appreciated that any other markers satisfying the above conditions allow the operation of the system according to the present invention. Consequently, it is possible using non-binary markers, for example four different markers instead of two for encoding two bits per marker.

The bit detection unit 308 is capable of extracting auxiliary information bits from the sequence of markers, conditioning that the control parameters have values in respective extended valid ranges, which include and are bigger than the respective valid ranges, That is even when the control parameters have values outside their respective valid ranges, and this makes the auxiliary bits robustly retrievable. The adaptive parameters adjustment unit 309, adjusts the set of control parameters, based upon the sequence of channel bits, so as to bring the control parameter in the respective valid ranges.

The stitching sequence is responsible for avoiding violations of the RLL code constraints (d=1, k=7 and r=6 for the 17PP code) and for proper DC control.

In order not to disturb the 17PP DC-control by replacing a part of the channel data stream, the running digital sum (RDS) value at the end of the stitching sequence in the modified link frame 1 (link frame 2) 402 (403) should match the RDS value of the original link frame 1 (link frame 2) 402 (403) at the same position. This means that the stitching sequence should be able to correct the RDS disparity between the modified beginning of the link frame 1 (link frame 2) 402 (403) and the original one. The stitching sequence should be long enough in order to be able to perform the necessary RDS disparity correction and to avoid the RLL code violations.

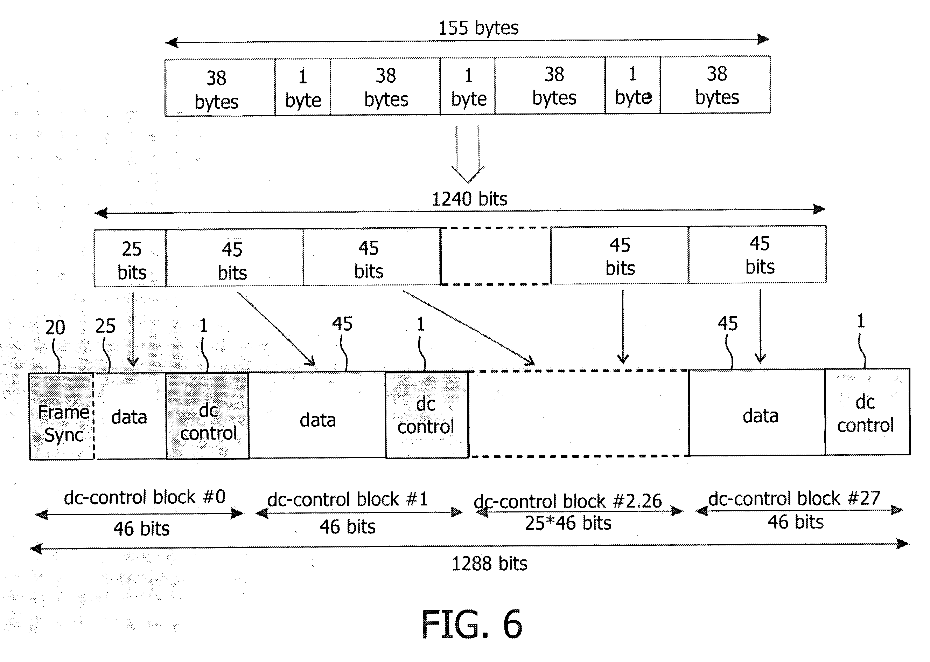

A particular choice of the stitching sequence length for the case when no redundant information about the bits S 14 to S0 included is given below. If the length of the stitching sequence is chosen to be 105 channel bits, then the total length of the data block being modified equals 315. The 105-bit long stitching sequence may compensate for the RDS change of up to 0.6*105=63, while practical worst-case RDS values for a 315-bit long block are in the range of 45-50. Therefore, one can conclude that the 105-bit long stitching sequence is sufficient. If the S 14 to S0 bits are stored in the first 210 channel bits after the frame sync FS7 42 (FS8 44), and use the following 105 channel bits for the RDS disparity control and for avoiding the RLL code violations, then the first 5 DC-control blocks of the recording frame (315 channel bits corresponding to the first 205 user bits) will be modified and the rest will remain intact. For a description of the BD-ROM recording frame format reference is made to Fig. 6.. Note that Fig. 6 refers to user bits rather than to channel bits.

If additional error-detection and/or error-correction information is embedded in the linking area with the aim to increase the reliability of the retrieved bits S 14 to S0, then more than 210 channel bits are required for storing the bits S14 to S0. Therefore, the length of the stitching sequence should also be increased in order to accommodate for a larger possible RDS disparity.

Another embodiment of the present invention may be constructed where the modified link frame 1 402 (or link frame 2 (403)) is constructed by inserting the sequence of markers containing the information about the bits S 14 to S0 at the beginning of the link frame 1 (link frame 2) 402 (403) followed then by the (truncated) original content of the link frame 1 (link frame 2) 402 (403), which then in turn is followed by a stitching sequence:
Link frame 1 (link frame 2) = FS7 42 (FS8 44)
+ Sequence of channel bits in which the bits S14 to S0 (+ possibly redundancy) are robustly encoded
+ Truncated version of the original link frame 1(2)
+ Stitching sequence

The stitching sequence in this case designed to fit the truncated version of the original link frame 1(2) with the frame sync of the next frame by ensuring proper RDS disparity control and ensuring that no RLL code violations occur. Due to the specific structure of the markers used for encoding the bits S14 to S0, no stitching is required between the included header and the truncated version of the original link frame 1(2). However, a certain stitching sequence may be included as well if desired.

In order to increase the stability of the reading/writing procedure the present invention has defined a robustly retrievable pattern that is written to parts of the linking frame. The patterns have certain distinct characteristics further increasing the functionality, operation, and advantage of the present invention. The main features of these patterns may be listed as follows:
- The patterns may be DC free;
- May contain many high frequency components;
- May contain all sequences critical for the performance of a Viterbi detector;
- May contain different frequency components in order to allow fast convergence of adaptive systems based on an LMS algorithm.

Some of the adaptive systems employed in a BD-readout which can benefit from using a data-aided mode of operation according to the present invention are listed below:
- DC-compensation unit;
- Timing recovery unit (both frequency lock aids and phase lock loop);
- Channel response estimation unit as used within PRML detector;
- Adaptive equalization unit;
- Cross-talk cancellation unit.
   The proposed format of the link frames makes sure that the channel data content of the link frames.
- Is DC-free such that DC-compensation schemes based on the RDS (running digital sum) algorithm as used in most optical drives;
- Is such that its average run-length is close to the average run-length of the main channel code in order to facilitate frequency lock aids of the timing recovery circuits based on driving the measured average run-length towards the expected value defined by the main channel code (3.4 for a 17PP code as used in BD);
- Contains sufficient high-frequency content in order to facilitate fast phase lock of the phase lock loop (PLL);
- Contains a range of different frequency components in order to facilitate robust convergence of the adaptive systems based on the LMS algorithm (such as LMS-based adaptive equalizer or LMS-based cross-talk canceller);
- Contains sequences critical for estimating the channel response within PRML (Viterbi) bit detector;
- Storing of information data on the disc may be done using several different techniques, such as, but not limited to, electron beam imprinting, laser beam imprinting, molding, or pressing using a master.

Moreover, although the description relates to BD-ROM and apparatus for retrieving information from such a disc, it is appreciated by a skilled person that the teachings of he invention may be applied to any high BDs, such as BD-R and BD-RE. Moreover, the apparatus may comprise means for writing onto such discs.

It should be noted that the word "comprising" does not exclude the presence of other elements or steps than those listed and the words "a" or "an" preceding an element do not exclude the presence of a plurality of such elements. It should further be noted that any reference signs do not limit the scope of the claims, that the invention may be implemented by means of both hardware and software, and that several "means" may be represented by the same item of hardware.

The above mentioned and described embodiments are only given as examples and should not be limiting to the present invention. Other solutions, uses, objectives, and functions within the scope of the invention as claimed in the below described patent claims should be apparent for the person skilled in the art.

## Claims

1. A system comprising an information carrier (1) and an apparatus for accessing said information carrier, the information carrier having recording unit blocks (400) comprising a sequence of channel bits, the recording unit blocks comprising a link frame (402, 403), the link frame comprising a frame sync (42, 44) and a link area (43, 45), the apparatus comprising:
- a bit recovery unit (308), operating upon a set of control parameters, capable of retrieving a number of channel bits, on condition that the control parameters have values in respective valid ranges, and
- an adaptive parameters adjustment unit (309), for adjusting the set of control parameters, based upon the sequence of channel bits, so as to bring the control parameter into the respective valid ranges,
- said link area comprising a link pattern for facilitating the adaptive parameters adjustment unit in adjusting the set of control parameters,
**characterized in that** the link pattern comprises a sequence of markers defined by a polarity transition, which encode auxiliary information, and the adaptive parameters adjustment unit is configured to use the auxiliary information for adjusting said set of control parameters.

2. The system of claim 1, wherein said markers are substantially DC-free and an average run-length of said markers is near an average run-length of a main channel code.

3. The system of claim 2, wherein said markers further contain one or several of:
- a high-frequency content in order to facilitate fast phase lock of the phase lock loop (PLL),
- a range of different frequency components,
- a sequences critical for estimating a channel response within PRML (Viterbi) bit detector.

4. The system according to claim 1, wherein the sequence of markers is located at the beginning of the link frame and is followed by a stitching sequence.

5. The system according to claim 4, wherein said stitching sequence fits a truncated version of a first link frame with the frame sync of a subsequent frame.

6. The system according to claim 4, wherein said stitching sequence matches a running digital sum (RDS) value of said original link frame.

7. The system according to claim 4, wherein said stitching sequence further comprises information for error detection and/or error correction for the auxiliary information.

8. The system according to claim 1, wherein said information carrier is a high density optical disc, preferably a Blu-ray disc.

9. An apparatus for accessing an information carrier (1) having recording unit blocks (400) comprising a sequence of channel bits, the recording unit blocks comprising a link frame (402, 403), the link frame comprising a frame sync (42, 44) and a link area (43, 45), the apparatus comprising:
- a bit recovery unit (308), operating upon a set of control parameters, capable of retrieving a number of channel bits, on condition that the control parameters have values in respective valid ranges, and
- an adaptive parameters adjustment unit (309), for adjusting the set of control parameters, based upon the sequence of said channel bits, so as to bring the control parameter into the respective valid ranges,
- the apparatus being capable of using a link pattern present in the link area for facilitating the adaptive parameters adjustment unit in adjusting the set of control parameters,
**characterized in that** the apparatus is further capable of decoding a sequence of markers, present in the link pattern, defined by a polarity transition, which sequence of markers encode auxiliary information, and the adaptive parameters adjustment unit is configured to use the auxiliary information for adjusting said set of control parameters.

10. An apparatus for recording information on an information carrier (1) having recording unit blocks (400) comprising a sequence of channel bits, the recording unit blocks comprising a link frame (402, 403), the link frame comprising a frame sync (42, 44) and a link area (43, 45), the link area comprising a link pattern for facilitating an adaptive parameters adjustment unit, present in an apparatus for accessing the information carrier, in adjusting a set of control parameters, **characterized by** comprising a an auxiliary information encoding unit for generating a link pattern which comprises a sequence of markers defined by a polarity transition, which sequence of markers encode auxiliary information for being used by the adaptive parameters adjustment unit for adjusting said set of control parameters.

11. An information carrier (1) having recording unit blocks (400) comprising a sequence of channel bits, the recording unit blocks comprising a link frame (402, 403), the link frame comprising a frame sync (42, 44) and a link area (43, 45), the link area comprising a link pattern for facilitating an adaptive parameters adjustment unit, present in an apparatus for accessing the information carrier, in adjusting a set of control parameters, **characterized in that** the link pattern comprises a sequence of markers defined by a polarity transition, which encode auxiliary information for being used by the adaptive parameters adjustment unit for adjusting said set of control parameters.

## Patentansprüche

1. System mit einem Informationsträger (1) und einem Gerät zum Zugreifen auf den genannten Informationsträger, wobei der Informationsträger Aufzeichnungseinheitsblöcke (400) mit einer Folge von Kanalbits aufweist, wobei die Aufzeichnungseinheitsblöcke ein Koppelframe (402, 403) haben, wobei das Koppelframe ein Frame-Synchronisationsgebiet (42, 44) und ein Koppelgebiet (43, 45) aufweist, wobei das Gerät Folgendes umfasst:
- eine Bitwiederherstellungseinheit (308), arbeitend mit einem Satz Steuerparameter, und imstande eine Anzahl Kanalbits zu empfangen, unter der Bedingung, dass die Steuerparameter Werte in den betreffenden gültigen Bereichen haben, und
- eine adaptive Parametereinstelleinheit (309) zum Einstellen des Satzes Steuerparameter, und zwar auf Basis der Folge von Kanalbits, damit der Steuerparameter in die betreffenden gültigen Bereiche eingebracht wird,
- wobei das genannte Koppelgebiet ein Koppelmuster aufweist, damit der adaptiven Parametereinstelleinheit die Einstellung des Satzes Steuerparameter ermöglicht wird,
**dadurch gekennzeichnet, dass** das Koppelmuster eine Folge von Markierungen aufweist, definiert durch einen Polaritätsübergang, wobei diese Markierungen Hilfsinformation codieren, und dass die adaptive Parametereinstelleinheit dazu vorgesehen ist, die Hilfsinformation zum Einstellen des genannten Satzes von Steuerparametern zu verwenden.

2. System nach Anspruch 1, wobei die genannten Markierungen im Wesentlichen DC-frei sind und eine mittlere Lauflänge der genannten Markierungen einer mittleren Lauflänge eines Hauptkanalcodes nahe liegt.

3. System nach Anspruch 2, wobei die genannten Markierungen weiterhin ein oder mehrere der nachfolgenden Elemente umfassen:
- einen HF-Inhalt um eine schnelle Phasenverriegelung der Phasenverriegelungsschleife (PLL) zu ermöglichen,
- eine Reihe verschiedener Frequenzanteile,
- eine Sequenz, kritisch zum Bilden einer Kanalreaktion innerhalb des PRML (Viterbi) Bitdetektors.

4. System nach Anspruch 1, wobei die Folge von Markierungen am Anfang des Koppelframes liegt, wonach eine Steppsequenz folgt.

5. System nach Anspruch 4, wobei die genannte Steppsequenz eine gestutzte Version eines ersten Koppelframes mit dem Frame-Synchronisationsgebiet und einem nachfolgenden Frame anpasst.

6. System nach Anspruch 4, wobei die genannte Steppsequenz einem laufenden digitalen Summenwert (RDS) des genannten ursprünglichen Koppelframes entspricht.

7. System nach Anspruch 4, wobei die genannte Steppsequenz weiterhin Information zur Fehlerdetektion und/oder Fehlerkorrektur für die Hilfsinformation aufweist.

8. System nach Anspruch 1, wobei der genannte Informationsträger eine optische Platte hoher Dichte, vorzugsweise eine Blu-Ray-Platte ist.

9. Gerät zum Zugreifen auf einen Informationsträger (1) mit Aufzeichnungseinheitsblöcken (400) mit einer Folge von Kanalbits, wobei die Aufzeichnungseinheitsblöcke ein Koppelframe (402, 403) aufweisen, wobei das Koppelframe ein Frame-Synchronisationsgebiet (42, 44) und ein Koppelgebiet (43, 45) umfasst, wobei das Gerät die nachfolgenden Elemente umfasst:
- eine Bitwiederherstellungseinheit (308), arbeitend mit einem Satz Steuerparameter, und imstande eine Anzahl Kanalbits zu empfangen, unter der Bedingung, dass die Steuerparameter Werte in den betreffenden gültigen Bereichen haben, und
- eine adaptive Parametereinstelleinheit (309) zum Einstellen des Satzes Steuerparameter, und zwar auf Basis der Folge von Kanalbits, damit der Steuerparameter in die betreffenden gültigen Bereiche eingebracht wird,
- wobei das Gerät imstande ist, ein Koppelmuster in dem Koppelgebiet zu verwenden, und zwar, damit der adaptiven Parametereinstelleinheit die Einstellung des Satzes Steuerparameter ermöglicht wird,
**dadurch gekennzeichnet, dass** das Gerät weiterhin imstande ist, eine Folge von Markierungen zu decodieren, die in dem Koppelmuster vorhanden sind, definiert durch einen Polaritätsübergang, wobei diese Folge von Markierungen Hilfsinformation codiert, und dass die adaptive Parametereinstelleinheit dazu vorgesehen ist, die Hilfsinformation zum Einstellen des genannten Satzes von Steuerparametern zu verwenden.

10. Gerät zum Aufzeichnen von Information auf einen Informationsträger (1) mit Aufzeichnungseinheitsblöcken(400) mit einer Folge von Kanalbits, wobei die Aufzeichnungseinheitsblöcke ein Koppelframe (402, 403 aufweisen, wobei das Koppelframe ein Frame-Synchronisationsgebiet (42, 44) und ein Koppelgebiet (43, 45) aufweist, wobei das Koppelgebiet ein Koppelmuster aufweist, damit eine adaptive Parametereinstelleinheit, die in einem Gerät vorhanden ist, die Möglichkeit hat, auf den Informationsträger zuzugreifen, beim Einstellen eines Satzes Steuerparameter, **dadurch gekennzeichnet, dass** das Gerät eine Hilfsinformationscodierungseinheit aufweist zum Erzeugen eines Koppelmusters, das eine Folge von Markierungen aufweist, definiert durch einen Polaritätsübergang, wobei diese Folge von Markierungen Hilfsinformation codiert, und zwar zur Verwendung durch die adaptive Parametereinstelleinheit zum Einstellen des genannten Satzes von Steuerparametern.

11. Informationsträger (1) mit Aufzeichnungseinheitsblöcken (400) mit einer Folge von Kanalbits, wobei die Aufzeichnungseinheitsblöcke ein Koppelframe (402, 403) haben, wobei das Koppelframe ein Frame-Synchronisationsgebiet (42, 44) und ein Koppelgebiet (43, 45) aufweist, wobei das Koppelgebiet ein Koppelmuster aufweist, damit eine adaptive Parametereinstelleinheit, die in einem Gerät vorhanden ist, die Möglichkeit hat, auf den Informationsträger zuzugreifen, beim Einstellen eines Satzes Steuerparameter,
**dadurch gekennzeichnet, dass** das Gerät eine Hilfsinformationscodierungseinheit aufweist zum Erzeugen eines Koppelmusters, das eine Folge von Markierungen aufweist, definiert durch einen Polaritätsübergang, wobei diese Folge von Markierungen Hilfsinformation codiert, und zwar zur Verwendung durch die adaptive Parametereinstelleinheit zum Einstellen des genannten Satzes von Steuerparametern.

## Revendications

1. Système comprenant un support d'information (1) et un appareil pour accéder audit support d'information, le support d'information ayant des blocs d'unité d'enregistrement (400) comprenant une séquence de bits de canal, les blocs d'unité d'enregistrement comprenant une trame de liaison (402, 403), la trame de liaison comprenant une synchronisation de trame (42, 44) et une zone de liaison (43, 45), l'appareil comprenant :
- une unité de rétablissement de bits (308), fonctionnant sur un ensemble de paramètres de commande, qui est capable de récupérer un certain nombre de bits de canal à condition que les paramètres de commande présentent des valeurs dans les gammes valides respectives, et
- une unité d'ajustement de paramètres adaptatifs (309) pour ajuster l'ensemble de paramètres de commande sont basés sur la séquence de bits de canal de manière à amener le paramètre de commande dans les gammes valides respectives,
- ladite zone de liaison comprenant une configuration de liaison pour faciliter que l'unité d'ajustement de paramètres adaptatifs ajuste l'ensemble de paramètres de commande,
**caractérisé en ce que** la configuration de liaison comprend une séquence de marqueurs étant définis par une transition de polarité qui codent l'information auxiliaire et **en ce que** l'unité d'ajustement de paramètres adaptatifs est configurée de manière à utiliser l'information auxiliaire pour ajuster ledit ensemble de paramètres de commande.

2. Système selon la revendication 1, dans lequel lesdits marqueurs sont sensiblement exempts de CC et dans lequel une longueur de course moyenne desdits marqueurs se situe près d'une longueur de course moyenne d'un code de canal principal.

3. Système selon la revendication 2, dans lequel lesdits marqueurs contiennent encore un ou plusieurs des paramètres suivants :
- un contenu haute fréquence afin de faciliter le verrouillage rapide de phase de la boucle à verrouillage de phase (PLL),
- une gamme de composantes de fréquence différentes,
- une séquence qui est critique pour estimer une réponse de canal dans un détecteur de bits PRML (Viterbi).

4. Système selon la revendication 1, dans lequel la séquence de marqueurs se situe au début de la trame de liaison et est suivie d'une séquence de couture.

5. Système selon la revendication 4, dans lequel ladite séquence de couture s'adapte à une version tronquée d'une première trame de liaison avec la synchronisation de trame d'une trame subséquente.

6. Système selon la revendication 4, dans lequel la séquence de couture correspond à une valeur numérique courante de somme (RDS) de ladite trame originale de liaison.

7. Système selon la revendication 4, dans lequel ladite séquence de couture comprend encore de l'information de détection d' erreurs et/ou de correction d'erreurs pour l'information auxiliaire.

8. Système selon la revendication 1, dans lequel ledit support d'information est un disque optique à haute densité, de préférence un disque de bleu-rayon.

9. Appareil pour accéder à un support d'information (1) ayant des blocs d'unité d'enregistrement (400) comprenant une séquence de bits de canal, les blocs d'unité d'enregistrement comprenant une trame de liaison (402, 403), la trame de liaison comprenant une synchronisation de trame (42, 44) et une zone de liaison (43, 45), l'appareil comprenant :
- une unité de rétablissement de bits (308), fonctionnant sur un ensemble de paramètres de commande, qui est capable de récupérer un certain nombre de bits de canal à condition que les paramètres de commande présentent des valeurs dans les gammes valides respectives, et
- une unité d'ajustement de paramètres adaptatifs (309) pour ajuster l'ensemble de paramètres de commande qui sont basés sur la séquence de bits de canal de manière à amener le paramètre de commande dans les gammes valides respectives,
- l'appareil étant capable d'utiliser une configuration de liaison qui se situe dans la zone de liaison pour faciliter que l'unité d'ajustement de paramètres adaptatifs ajuste l'ensemble de paramètres de commande,
**caractérisé en ce que** l'appareil est encore capable de décoder une séquence de marqueurs étant présents dans la configuration de liaison qui sont définis par une transition de polarité, laquelle séquence de marqueurs codent l'information auxiliaire et **en ce que** l'unité d'ajustement de paramètres adaptatifs est configurée de manière à utiliser l'information auxiliaire pour ajuster ledit ensemble de paramètres de commande.

10. Appareil pour enregistrer de l'information sur un support d'information (1) ayant des blocs d'unité d'enregistrement (400) comprenant une séquence de bits de canal, les blocs d'unité d'enregistrement comprenant une trame de liaison (402, 403), la trame de liaison comprenant une synchronisation de trame (42, 44) et une zone de liaison (43, 45), la zone de liaison comprenant une configuration de liaison pour faciliter qu'une unité d'ajustement de paramètres adaptatifs qui se situe dans un appareil pour accéder au support d'enregistrement ajuste un ensemble de paramètres de commande, **caractérisé en ce qu'**elle comprend une unité de codage d'information auxiliaire pour générer une configuration de liaison qui comprend une séquence de marqueurs étant définis par une transition de polarité, laquelle séquence de marqueurs codent de l'information auxiliaire pour être utilisée par l'unité d'ajustement de paramètres adaptatifs afin d'ajuster ledit ensemble de paramètres de commande.

11. Support d'information (1) ayant des blocs d'unité d'enregistrement (400) comprenant une séquence de bits de canal, les blocs d'unité d'enregistrement comprenant une trame de liaison (402, 403), la trame de liaison comprenant une synchronisation de trame (42, 44) et une zone de liaison (43, 45), la zone de liaison comprenant une configuration de liaison pour faciliter qu'une unité d'ajustement de paramètres adaptatifs qui se situe dans un appareil pour accéder au support d'enregistrement ajuste un ensemble de paramètres de commande, **caractérisé en ce que** la configuration de liaison comprend une séquence de marqueurs étant définis par une transition de polarité qui codent de l'information auxiliaire pour être utilisée par l'unité d'ajustement de paramètres adaptatifs afin d'ajuster ledit ensemble de paramètres de commande.
